# EUROPEAN PATENT APPLICATION

(11) **EP 4 822 231 A1**
(43) Date of publication of application: **14.10.2026**
(21) Application number: 26171537.9
(22) Date of filing: 09.04.2026
(51) Int. Cl.: F16L 23/028, F16L 23/18

(54) **FLUIDIC CONNECTOR FOR REFRIGERATION SYSTEM**

(30) Priority: 11.04.2025 US 202563787079 P
(71) Applicant: Carrier Corporation, Palm Beach Gardens, FL 33418 (US)
(72) Inventor: PARLIER, Benoît, 01120 Montluel (FR); BERTHAUD, Gilles, 01120 Montluel (FR)
(74) Representative: Dehns

(57) **Abstract**

A fluidic connector (110) for a refrigeration system (100) is disclosed. The fluidic connector (110) comprises a plate (116) having a hole configured to allow a pipe (202) to be accommodated therein, wherein the pipe (202) comprises a flange (204) radially extending outward from an end of the pipe (202). The fluidic connector (110) further includes one or more fasteners (208) configured to reversibly secure the plate (116) to an opposable structure (114), with the flange (204) of the pipe (202) being clamped between the plate (116) and the opposable structure (114).

## Description

### CROSS-REFERENCE TO RELATED APPLICATION

This patent application claims the benefit of U.S. Provisional Patent Application No. 63/787,079, filed on April 11, 2025, which is incorporated by reference herein in its entirety.

### BACKGROUND

The subject disclosure relates to the field of refrigeration systems, and more particularly, to a fluidic connector for safe operation in a refrigeration system.

### SUMMARY

A first aspect of the invention provides a fluidic connector comprising a plate having a hole configured to allow a pipe to be accommodated therein, wherein the pipe comprises a flange radially extending outward from an end of the pipe, and one or more fasteners configured to reversibly secure the plate to an opposable structure of a refrigeration enclosure by clamping the flange of the pipe between the plate and the opposable structure.

Optionally, a diameter of the hole is greater than that of the pipe, and less than that of the flange.

Optionally, the opposable structure comprises a passage, and wherein the pipe is fluidically connected to the passage when the plate is secured to the opposable structure.

Optionally, the opposable structure comprises a passage, and wherein the pipe is aligned to a first end of the passage and another pipe is connected to a second end of the passage, the passage providing a fluidic connection between the pipe and the another pipe.

Optionally, the another pipe is brazed to the passage.

Optionally, the fluidic connector further comprises a sealing element disposed between the flange and a passage defined on the opposable structure, and configured to fluidically seal a portion of the passage around the another pipe.

Optionally, the sealing element is any one of: a gasket, or an O-ring.

Optionally, the opposable structure defines an indentation corresponding to a geometric profile of the flange, and wherein the flange is configured to fit into the indentation when the plate is fastened to the opposable structure.

Optionally, the one or more fasteners are threaded screw fasteners configured to reversibly secure the plate to the opposable structure.

Optionally, the plate and the flange are configured to fluidically seal a passage on the opposable structure from ambient air on a first side of the opposable structure, and wherein the passage is configured to provide fluidic communication through the pipe.

Optionally, the plate is made from iron.

Optionally, the pipe is made from copper, and/or the one or more fasteners are made from stainless steel.

Optionally, the pipe fluidically connects a first portion of a refrigeration circuit disposed within the refrigeration enclosure with a second portion of the refrigeration circuit routed through a heat exchanger outside the refrigeration enclosure.

A second aspect of the invention provides a refrigeration system, comprising a refrigerant circuit configured to circulate a refrigerant fluid therethrough, wherein the refrigerant circuit comprises a first pipe at least partially disposed in a passage defined on an opposable structure of a refrigeration enclosure, and wherein a flange defined on an end of the first pipe is secured between the opposable structure and a plate by one or more fasteners, and a second pipe at fluidically connected to the first pipe through the passage.

Optionally, the refrigeration system comprises the fluidic connector of the first aspect, optionally including any one or more of the optional features thereof, and the plate of the refrigeration system is the plate of the fluidic connector.

Optionally, the plate is configured to clamp the flange of the first pipe between the plate and the opposable structure to fluidically seal air on a first side of the opposable structure from a second side of the opposable structure.

Optionally, the plate is reversibly secured to the opposable structure by the one or more fasteners.

Optionally, the first pipe is disposed within the refrigeration enclosure, and the second pipe is disposed externally to the refrigeration enclosure.

Optionally, the second pipe is connected to a Round Tube Plate Fin (RTPF) coil of a heat exchanger of the refrigeration system.

Optionally, the second pipe is brazed to the opposable structure.

Viewed from a third aspect, the invention provides a refrigeration system, comprising a first enclosure comprising one or more refrigeration components, a refrigerant circuit configured to circulate a refrigerant fluid through the one or more refrigeration components and a heat exchanger placed externally to the first enclosure, and a second enclosure comprising one or more electrical components configured to power and/or control the one or more refrigeration components. The refrigeration system further comprises one or more fluidic connectors, comprising a plate having a hole configured to allow a pipe to be accommodated therein, wherein the pipe comprises a flange radially extending outward from an end of the pipe, one or more fasteners configured to reversibly secure the plate to an opposable structure of the first enclosure by clamping the flange of the pipe between the plate and the opposable structure.

The foregoing summary is illustrative only and is not intended to be in any way limiting. In addition to the illustrative aspects, embodiments, and features described above, further aspects, embodiments, features, and techniques will become more apparent from the following description taken in conjunction with the drawings.

### BRIEF DESCRIPTION OF THE DRAWINGS

The accompanying drawings are included, by way of example only, to provide a further understanding of the invention. The drawings illustrate exemplary embodiments of the invention and, together with the description, serve to explain the principles of the invention. However, the scope of the invention is defined only by the claims.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIGs. 1A and 1B illustrate an example front view and a section view of a refrigeration system.
FIG. 2A illustrates an expanded view of fluidic connectors used for operation and maintenance of the refrigeration system.
FIG. 2B illustrates an isolated view of another fluidic connectors that hermetically seal passages on walls of a first enclosure of the refrigerant system.
FIGs. 2C and 2D illustrate isolated views of a first and a second plate of fluidic connectors.
FIGs. 3A and 3B illustrate cross-sectional views of the fluidic connector providing fluidic connection between pipes of the refrigeration system.

### DETAILED DESCRIPTION

The following is a detailed description of the embodiments depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents, among others, at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components described herein may be positioned in any desired orientation. Thus, the use of terms such as "above," "below," "upper," "lower," "first," "second," "beside," "adjacent," "inside," "outside," or other like terms to describe a spatial relationship between various components or to describe the spatial orientation of aspects of such components should be understood to describe a relative relationship between the components or a spatial orientation of aspects of such components, respectively, as the components described herein may be oriented in any desired direction.

Refrigeration systems utilize a fluid, typically a refrigerant, to transfer heat. The refrigeration systems can be used for both cooling and heating, depending on the direction of the fluid flow. In refrigeration systems, the refrigeration cycle can be reversed to either absorb heat from the environment (cooling) or release heat to the environment (heating). These systems are often found in applications where both heating and cooling are needed, such as in heat pumps, air conditioning systems, and refrigeration systems for both industrial and commercial purposes.

Conventional refrigeration systems often use brazed joints for the assembly of a refrigerant circuit. For instance, in existing refrigeration systems using round-tube and plate fin (RTPF) heat exchangers, the pipes passing through walls and/or other components are brazed to the walls of the enclosure, to provide robust sealing for different operating conditions (such as heating and/or cooling). Brazing offers a strong and reliable connection, but brazing does come with its challenges. Once brazed, repairs or modifications to the refrigerant circuit may not be easily implemented. For example, if a coil needs to be replaced or adjusted, the brazed joints must be cut or broken, and new brazing joints may need to be added during re-assembly, which can be time-consuming, and costly. Such processes may require refrigerant recovery and system evacuation, which add to the cost and time for maintenance, for example. Further, brazed joints located within the refrigeration circuit may not be easily accessed. This makes both (dis)assembly and maintenance more challenging. Technicians may need specialized tools, or the refrigeration system may need to be disassembled, to gain access to the refrigeration circuit. Brazing the components also affects the extent to which the refrigeration system can be modularized. Further, brazing consumes additional space, thereby limiting the ability to develop compact designs for the refrigeration systems. In the case of flammable refrigerant, brazing/unbrazing process brings an additional ignition risk that is avoided with screwed connection.

There is a need for an improved connector that effectively addresses at least the aforementioned challenges of the conventional brazed joints used in conventional refrigeration systems and provides safety, and ease of operation during disassembly or maintenance of the refrigeration systems.

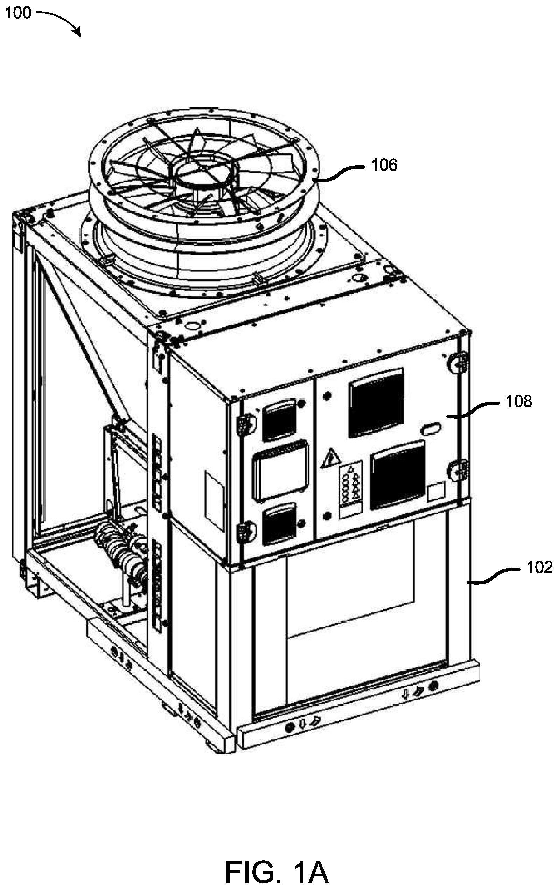

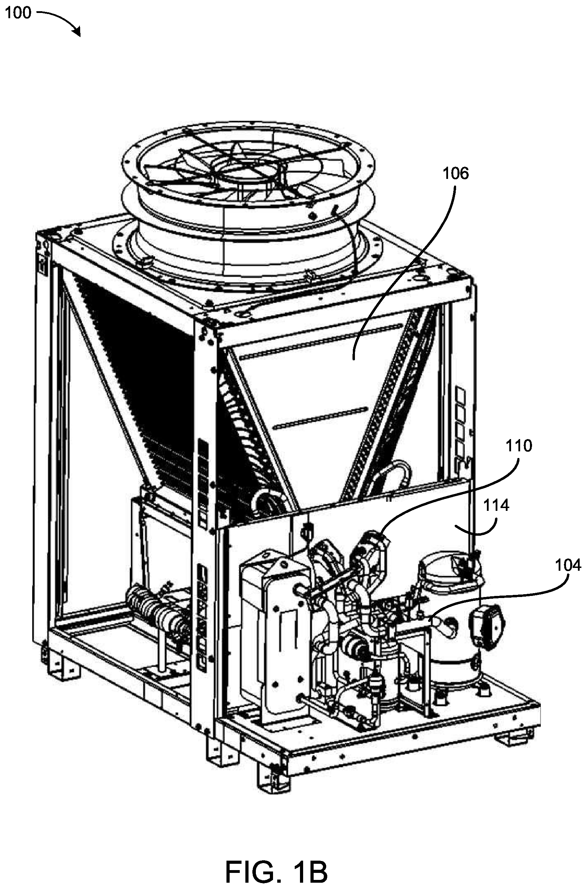

Referring to FIGs. 1A and 1B, a front view and a sectional view (i.e., with walls removed) of the refrigeration system 100 is illustrated. In one or more embodiments, the refrigeration system 100 may include a first/refrigerant enclosure 102 including a refrigerant circuit 104 configured to circulate a refrigerant fluid therethrough. At least a portion/first portion of the refrigerant circuit 104 may be routed through one or more refrigeration components placed in the first enclosure 102 (such as compressors, heat exchangers/evaporators, pipes/tubes, expansion devices, and the like, but not limited thereto). Further, at least another portion/second portion of the refrigerant circuit 104 may be routed through a heat exchanger 106.

In one or more embodiments, the refrigeration components of the refrigerant circuit 104 may be placed in the first enclosure 102. The first enclosure 102 may be fluidically sealed to prevent air within the first enclosure 102 from moving out to the ambient air, and vice-versa. Fluidically sealing the first enclosure 102 may allow any leaks of the refrigerant fluid within the first enclosure 102 to be retained therein, and prevent the leaked refrigerant fluid from spreading out. Since the refrigerant fluid (such as propane) may be flammable, it is desirable to prevent the refrigerant fluid from coming into contact with other components capable of igniting the refrigerant fluid, such as the electrical components.

In one or more embodiments, the electrical components may be placed in the second enclosure 108, and sealed-off from the first enclosure 102. Such fluidical sealing may further reduce the risk of ignition of the refrigerant fluid leaking from at least the first portion of the refrigerant circuit 104. Further, as stated, the electrical components may be configured to power and/or control the refrigeration components to flow the refrigerant fluid from first enclosure 102 to the heat exchanger 106, and back to the first enclosure 102. The electrical components may be connected to the refrigeration components, among others, through insulated wires. The insulation of the wires may prevent direct contact between the refrigerant fluid and conducting surface carrying electrical power therethrough. The insulated wires may be used for supplying electrical power and/or transmitting control signals to the refrigeration components, for operation thereof.

In one or more embodiments, the refrigeration components and the heat exchanger 106 may be configured to act on/process the refrigerant fluid. In some embodiments, the refrigeration components and the heat exchanger 106 may be configured to either increase or decrease temperature and/or pressure of the refrigerant fluid flowing/pumped through the refrigerant circuit 104. For example, a compressor within the first enclosure 102 may be configured to increase the pressure and pump the refrigerant fluid to the heat exchanger 106. The heat exchanger 106 may cause also the refrigerant fluid to eject heat to the ambient air, thereby reducing the temperature thereof.

The heat exchanger 106 may be placed externally to the first enclosure 102, thereby requiring connections through walls or opposable structures (such as opposable structure 114) of the first enclosure 102. The heat exchanger 106 may be configured to allow ambient air to exchange heat with the refrigerant fluid.

In one or more embodiments, the heat exchanger 106 may be RTPF heat exchangers having at least one RTPF coil. The refrigerant fluid of the refrigerant circuit 104 may be circulated through the RTPF coil, to allow the refrigerant fluid to exchange heat with ambient air. In one or more embodiments, the heat exchanger 106 may also include a fan/blower configured to blow air over the RTPF coils, for further promoting heat exchange. The RTPF coils may be organized as heat exchange plates. In embodiments shown in FIGs. 1A and 1B, the RTPF coils may be arranged in two heat exchange plates arranged in a substantially V-shaped orientation.

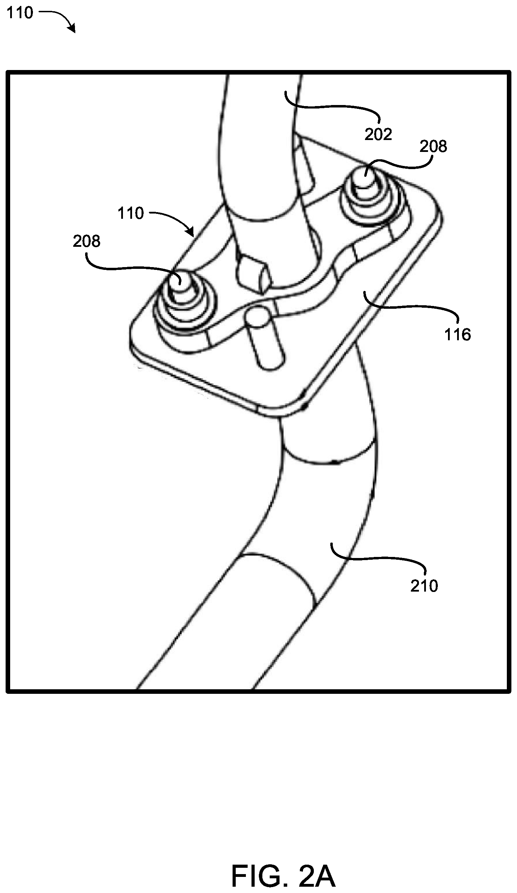

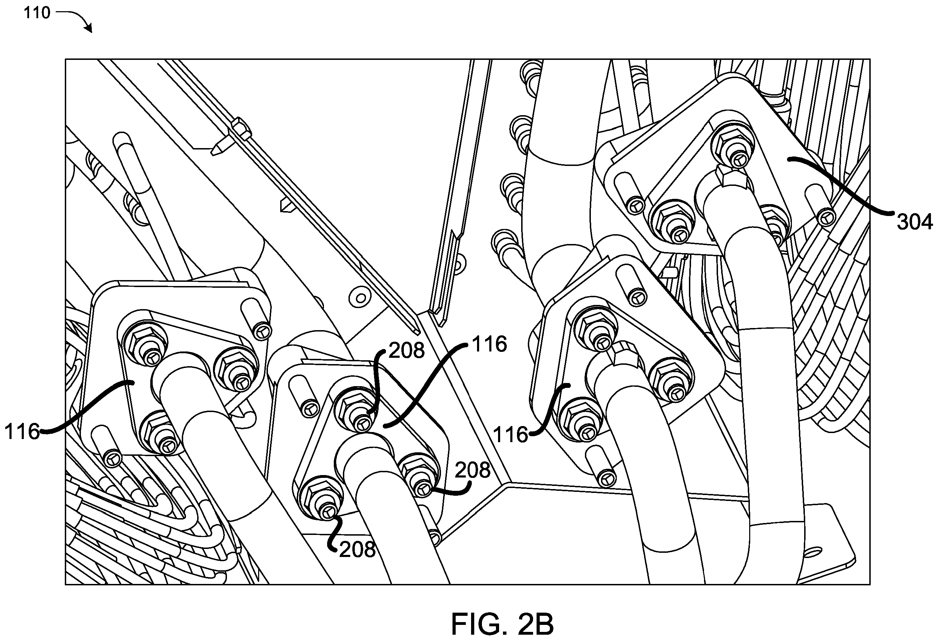

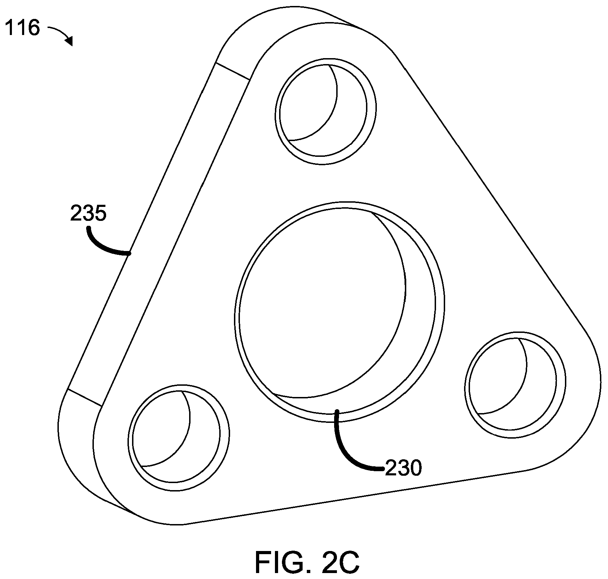

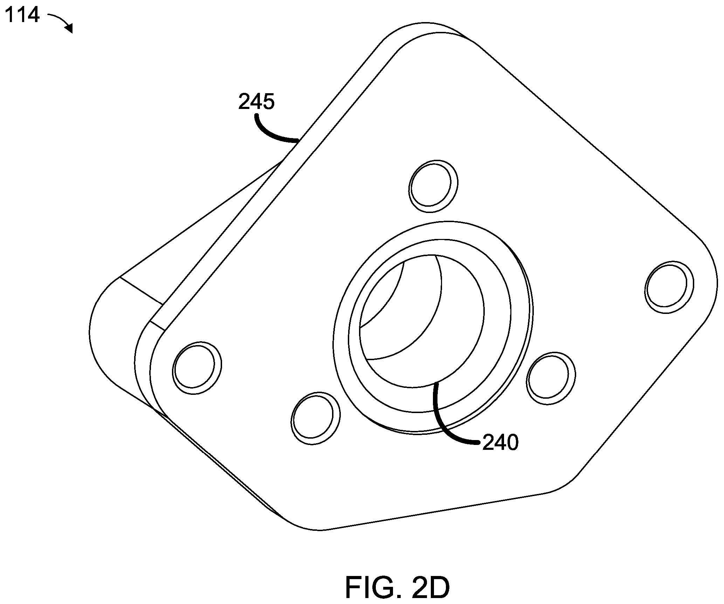

As stated, since the refrigerant circuit 104 is routed through the refrigeration components within the first enclosure 102, and the heat exchanger 106 outside the first enclosure 102, at least some pipes/tubes forming the refrigerant circuit 104 may pass through a wall or an opposable structure of the first enclosure 102. The refrigeration system 100 may include one or more of fluidic connectors, such as fluidic connector 110, which allow pipes of the refrigerant circuit 104 to be routed through walls or opposable structures (such as opposable structure 114), while ensuring that the first enclosure 102 remains fluidically sealed (with respect to movement of air) from the ambient environment. The fluidic connector 110 may prevent any leaks of the refrigerant fluid within the first enclosure 102 from spreading and moving out of the first enclosure 102. FIGs. 2 to 3B describe further details of an exemplary fluidic connector 110.

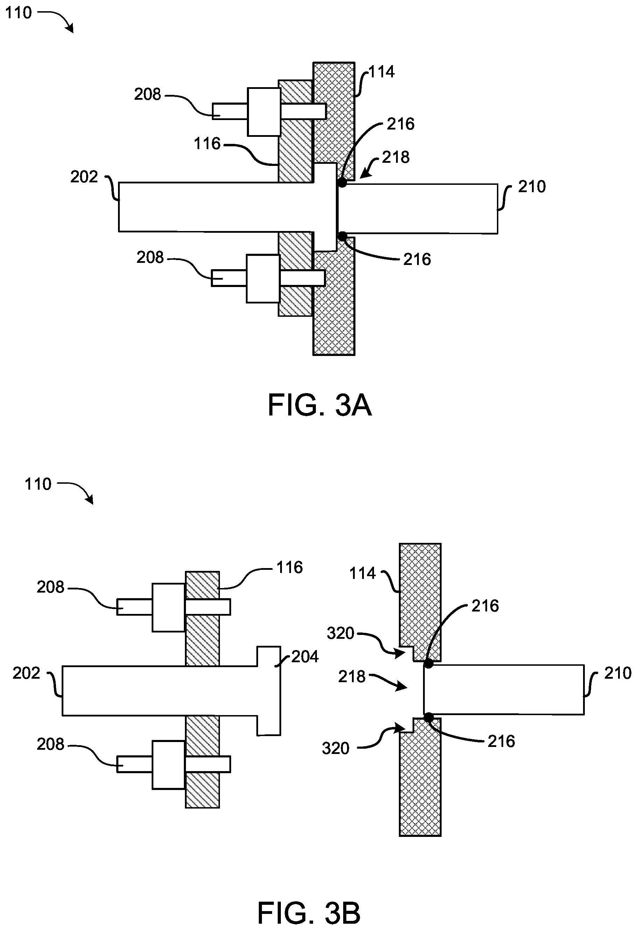

Referring to FIGs. 2A to 3B, an expanded view and cross-sectional views of a fluidic connector 110 used for operation and maintenance of the refrigeration system 100 is illustrated. FIG. 2A shows the fluidic connector 110 isolated from the opposable structure 114 (as shown in FIGs. 3A and 3B). In one or more embodiments, the fluidic connector 110 may include a plate having a hole configured to allow a pipe 202 to be accommodated therein. The pipe 202 may have a flange 204 radially extending outward from an end of the pipe 202. The pipe 202 may be the pipe disposed within the first enclosure 102, or a first side corresponding to the interior of the first enclosure 102.

In one or more embodiments, the plate 116 may be configured to accommodate or seat the (first) pipe 202 (and/or second pipe 210) on the hole thereof. In some embodiments, a diameter of the hole may be greater than that of the pipe 202, and less than that of the flange 204. In such embodiments, the flange 204 of the pipe 202 may be anchored against the plate 116, once the pipe is passed through the hole, as shown in FIG. 3B.

In one or more embodiments, the plate 116 may be reversibly/removably secured to the opposable structure 114 by one or more mechanical fasteners. In some embodiments, the mechanical fasteners may be any one or a combination of, screws, nails, nuts and bolts, rivets, interlocking elements, interference fit elements, and the like, but not limited thereto.

In one or more embodiments, one or more fasteners 208 may be configured to reversibly secure the plate 116 to the opposable structure 114. In some embodiments, the flange 204 of the pipe 202 may be clamped between the plate 116 and the opposable structure 114. In one or more embodiments, the fasteners 208 may be threaded screw fasteners configured to reversibly secure the plate 116 to the opposable structure 114 by passing through corresponding holes on the plate 116, and coming into threaded engagement with corresponding threaded provisions on the opposable structure 114 (as shown in FIGs. 3A and 3B).

As shown in FIG. 2A, in one or more embodiments, the plate 116 may be secured to the opposable structure 114 by two fasteners 208. In one or more embodiments, the plate 116 may be secured to the opposable structure 114 by three fasteners 208, as shown in FIGs. 2B to 2D. The fasteners 208 may be passed through holes of the plates, to secure the plates together with the refrigerant circuit 104 passing through the fluidic connectors 110. The fasteners 208 and/or the corresponding holes/provisions/apertures may be disposed on opposing sides on the plates 116 with respect to the refrigerant circuit 104. In one or more embodiments, the fasteners 208 may be disposed equidistantly from each other and the refrigerant circuit 104 passing through the fluidic connectors 110.

Referring to FIGs. 2C and 2D, in some embodiments, the plate 116 may include provisions/apertures 230 (such as holes or cavities on the plates 116) through which the refrigerant may be flowed. In such embodiments, the pipes 202, 210 of the refrigerant circuit 104 may be brazed to the plates at the provisions/apertures 230. The refrigerant may flow through the pipes 202, 210 on one side of the walls of the first enclosure 102, through the provisions 230 on the plates 116, and then the pipes 202, 210 on the other side of the walls of the first enclosure 102. As illustrated in FIG. 2C, the plate 116 may define an outer edge 235 forming a substantially triangular profile to accommodate the three equidistant fasteners 208.

In one or more embodiments, the opposable structure 114 may include a detachable element from the walls of the first enclosure 102, or integrally secured to the walls of the first enclosure 102. In one or more embodiments, the opposable structure 114 may include another provision/aperture 240, corresponding to the provisions/apertures 230 of the plate 116. In one or more embodiments, the provisions/apertures 230, 240 may correspond to a threaded hole configured to threadably engage the fasteners 208. Alternatively, the fasteners 208 may pass entirely through the opposable structure 114 to engage with complementary locking nuts. As shown in FIG. 2D, the opposable structure 114 may define an outer edge 245 having a geometric profile substantially matching the plate 116 to align the provision/aperture 240 with the provision/aperture 230 during assembly.

Accordingly, in some embodiments, the plates 116 and the opposable structure 114 may include a substantially triangular geometric profile. The shape of the plate 116, the opposable structure 114 and the arrangement of the fasteners 208 may provide improved secure and hermetical seal. the substantially triangular geometric profile may minimize a physical footprint of the fluidic connector 110 while enabling a three-point, equidistant clamping arrangement around the central passage 218. Such an arrangement may provide a uniform pressure distribution on the flange 204 and an intermediate sealing element, thereby preventing localized compression loss, reducing a risk of structural distortion under highpressure refrigerant flows, and ensuring a robust hermetic seal to prevent the refrigerant fluid from escaping the first enclosure 102.

In one or more embodiments, the flange 204 of the pipe 202 may be clamped between the plate 116 and the opposable structure 114. In such embodiments, the pipe 202 may also be secured to the opposable structure 114.

In one or more embodiments, the opposable structure 114 may include a passage 218, as shown in FIGs. 3A and 3B. The passage 218 may be configured to allow the pipes of the refrigerant circuit 104 to be routed out of, and/or into the first enclosure 102. The passage 218 may enable communication of the refrigerant fluid from the refrigeration components within the first enclosure 102 to the heat exchanger 106 outside the first enclosure 102.

In one or more embodiments, the pipe 202 may be aligned with the passage 218 to enable fluidic communication (i.e., of the refrigerant fluid) through the passage 218, when the plate 116 is secured to the opposable structure 114.

In one or more embodiments, the (first) pipe 202 may be aligned and connected to a first end of the passage 218 and another pipe (or second pipe) 210 may be aligned and connected to a second end of the passage 218, as shown in FIG. 3A. In such embodiments, the passage 218 may provide a fluidic connection between the first pipe 202 and the second pipe 210.

The plate 116 and the flange 204 may be configured to fluidically seal the passage 218 on the opposable structure 114 from ambient air on a first side of the opposable structure 114, while allowing the pipes 202, 210 to be accommodated for fluidic communication of the refrigerant fluid therethrough. The plate 116 and flange 204 may work together to form a fluidic seal meant to prevent ambient air or unwanted contaminants from entering the refrigeration system 100, while allowing the refrigerant fluid to flow through the pipe 202.

In one or more embodiments, the opposable structure 114 may define an indentation 320 corresponding to a geometric profile of the flange 204, and the flange 204 may be configured to fit into the indentation 320 on the opposable structure 114 being fastened to the opposable structure 114. The complementary geometric profiles of the flange 204 and the indentation 320 may be configured to fluidically seal the passage 218.

In one or more embodiments, the first pipe 202 may be disposed within the refrigeration enclosure 102 (or on a first side of the opposable structure 114), and the second pipe 210 may be disposed externally to the first/refrigeration enclosure 102 (or on a second side of the opposable structure 114, opposite to the first side).

In one or more embodiments, the second pipe 210 may be connected to a RTPF coil of the heat exchanger 106. In such embodiments, the second pipe 210 may be configured to enable fluid communication between the refrigeration components and the heat exchanger 106 through the first and second pipes 202, 210.

In some embodiments, the first and second pipes 202, 210 of the refrigerant circuit 104 may be arranged with the fluidic connector 110, to provide a path for the refrigerant fluid to exit the first enclosure 102. For example, the first pipe 202 may be configured to flow the refrigerant fluid pumped by the refrigeration component indicative of a compressor to flow therethrough, and to the second pipe 210. The refrigerant fluid may exit the first enclosure 102 on passing through the first pipe 202 to the second pipe 210. The second pipe 210 may further provide a path from the first pipe 202 to the heat exchanger 106. In some embodiments, the heat exchanger 106 may be configured to release heat from the refrigerant fluid.

In another embodiment, the first and second pipes 202, 210, and the fluidic connector 110 may be arranged to allow the refrigerant fluid to enter into the first enclosure 102. For example, the refrigerant fluid cooled by the heat exchanger 106 may be circulated back to the first enclosure 102 by flowing the refrigerant fluid through the second pipe 210 and the first pipe 202, in that order. The first pipe 202 may be connected to the refrigeration components, to which the cooled refrigerant fluid from the heat exchanger 106 may flow.

In some embodiments, the second pipe 210 may be brazed to the passage 218. In other embodiments, the second pipe 210 may be connected to opposable structure 114 through another fluidic connector on the opposing side of the fluidic connector 110 associated with the first pipe 202.

Further, in one or more embodiments, sealing elements 216 may be disposed between at least one of the pipes (viz., first pipe 202, or second pipe 210) and the passage defined on the opposable structure 114. The sealing elements 216 are configured to fluidically seal the passage 218 from ambient environment. The sealing element 216 may include any or a combination of, a gasket, or an O-ring, but not limited thereto. The internal structure of the pipes (first pipe 202 and the second pipe 210), in combination with the plate 116 and the flange 204, may maintain smooth refrigerant fluid flow while effectively isolating the refrigerant fluid from ambient air.

In some embodiments, the plate 116 may be made from iron. Further, the pipes 202, 210 may be made from copper, and the fasteners 208 may be made from stainless steel. Additionally, the opposable structure 114 may be made of brass or brass blocks. However, it may be appreciated that the materials making the plate 116, the pipes 202, 210, the opposable structure 114, and the fasteners 208 may be suitably adapted based on requirements of the use case.

Referring to FIGs. 3A and 3B, cross-sectional views of an assembled and a partially disassembled fluidic connector 110 are illustrated, respectively. While FIGs. 3A and 3B illustrate an embodiment utilizing two fasteners 208, the depicted arrangement may similarly be implemented in a three-fastener configuration (such as the configuration shown in FIGs. 2B to 2D), where a third fastener is omitted/hidden. As shown in FIG. 3A, the first pipe 202 may be partially disposed in the passage 218 defined on the opposable structure 114 of the refrigeration enclosure 102. The first pipe 202 may be secured to the opposable structure 114 by the plate 116 and the second pipe 210 may be partially disposed in the passage 218 such that the second pipe 210 may be fluidically connected to the first pipe 202.

In one or more embodiments, the first pipe 202 may be disposed within the refrigeration enclosure 102, and the second pipe 210 may be disposed externally to the refrigeration enclosure 102. The plate 116 may be reversibly secured to the opposable structure 114 by the fasteners 208. Further, the plate 116 may be configured to clamp the flange 204 of the first pipe 202 between the plate 116 and the opposable structure 114 to fluidically seal air on the first side of the opposable structure 114 from the second side of the opposable structure 114. This fluidic seal may ensure that only the refrigerant fluid is able to flow through the pipes 202, 210 maintaining a continuous fluidic pathway while isolating the refrigerant fluid from environmental contaminants. The passage 218 may be engineered for optimal fluid communication, with a secure interface between the plate 116 and the flange 204.

Further, referring to FIG. 3B, the fasteners 208 may be reversible, and may allow the fluidic connector 110 to be removed based on requirements (such as maintenance or replacement of parts), without requiring sophisticated equipment and/or otherwise cutting or breaking brazed components. For example, when the fasteners 208 are studs, the fasteners 208 may be loosened and removed to detach and disassemble the fluidic connector 110. As shown in FIG. 3B, upon loosening of the fasteners 208, the plate 116 may be detached from the opposable structure 114. In one or more embodiments, detachment of the plate 116 may allow the flange 204 of the pipe 202 to be released from being clamped against the opposable structure 114. In such a configuration, the pipe 202 may be removed from the passage 218 defined on the opposable structure 114, for example, for maintenance or replacement operations.

In one or more embodiments, the refrigeration system 100 may include multiple ones of the fluidic connectors 110 for routing the refrigerant circuit 104 between the refrigeration components and the heat exchanger 106 (among other components external to the first/refrigeration enclosure 102 to which the refrigerant fluid may be routed). In one or more embodiments, a first fluidic connector may be configured to facilitate a flow of refrigerant fluid out of the refrigeration enclosure 102, and a second fluidic connector may be configured to facilitate a flow of refrigerant fluid into the refrigeration enclosure 102.

For example, the first fluidic connector may be arranged to fluidically connect a pipe from a compressor within the refrigeration enclosure 102 to a pipe leading towards an external heat exchanger 106, thereby allowing the refrigerant fluid to be directed out of the refrigeration enclosure. Concurrently, the second fluidic connector may be arranged to fluidically connect another pipe from the external heat exchanger 106 to another pipe leading towards an expansion valve within the refrigeration enclosure 102, thereby allowing the refrigerant fluid to be directed back into the refrigeration enclosure after passing through the heat exchanger.

In one or more embodiments, the fluidic connector 110 may enable a modular design for the refrigeration system 100, facilitating easier assembly and maintenance, particularly in confined spaces and during field operations. The reversible securing mechanism of the fluidic connector 110 may allow for components to be readily accessed and replaced, which may be advantageous compared to conventional brazed joints.

The fluidic connectors 110 may also facilitate a more compact design of the refrigeration system 100. The fluidic connector 110 may eliminate a need for additional space around connections typically required for brazing or soldering, and may be particularly advantageous in applications where space is constrained.

Thus, the described embodiments overcome drawbacks, limitations, and shortcomings associated with existing conventional refrigeration systems by providing an improved and effective solution that provides safe operation and easy maintenance of the refrigeration system 100. This may minimize a risk of proximity between the flammable refrigerant fluid and the one or more electrical components of the refrigerant circuit 104 and also contains the refrigerant fluid within the first enclosure 102 in an event of leakage.

While the invention has been described with reference to exemplary embodiments, it will be understood by those skilled in the art that various changes may be made and equivalents may be substituted for elements of the described embodiments without departing from the scope of the invention as defined by the appended claims. Modifications may be made to adapt a particular situation or material to the teachings herein without departing from the scope of the invention. Therefore, it is intended that the invention not be limited to the particular embodiment disclosed, but that the invention includes all embodiments falling within the scope defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A fluidic connector (110), comprising:
a plate (116) having a hole configured to allow a pipe (202) to be accommodated therein, wherein the pipe comprises a flange (204) radially extending outward from an end of the pipe; and
one or more fasteners (208) configured to reversibly secure the plate to an opposable structure (114) of a refrigeration enclosure (102, 108) by clamping the flange of the pipe between the plate and the opposable structure.

2. The fluidic connector of claim 1, wherein a diameter of the hole is greater than that of the pipe, and less than that of the flange.

3. The fluidic connector of claim 1 or 2, wherein the opposable structure comprises a passage, and wherein the pipe is fluidically connected to the passage when the plate is secured to the opposable structure.

4. The fluidic connector of claim 1 or 2, wherein the opposable structure comprises a passage, and wherein the pipe is aligned to a first end of the passage and another pipe (210) is connected to a second end of the passage, the passage providing a fluidic connection between the pipe and the another pipe, optionally wherein the another pipe is brazed to the passage.

5. The fluidic connector of any preceding claim, further comprising a sealing element (216) disposed between the flange and a passage defined on the opposable structure, and configured to fluidically seal a portion of the passage around another pipe, optionally wherein the sealing element is any one of: a gasket, or an O-ring.

6. The fluidic connector of any preceding claim, wherein the opposable structure defines an indentation (320) corresponding to a geometric profile of the flange, and wherein the flange is configured to fit into the indentation when the plate is fastened to the opposable structure.

7. The fluidic connector of any preceding claim, wherein the one or more fasteners are threaded screw fasteners configured to reversibly secure the plate to the opposable structure.

8. The fluidic connector of any preceding claim, wherein the plate and the flange are configured to fluidically seal a passage on the opposable structure from ambient air on a first side of the opposable structure, and wherein the passage is configured to provide fluidic communication through the pipe.

9. The fluidic connector of any preceding claim, wherein the plate is made from iron, and/or the pipe is made from copper, and/or the one or more fasteners are made from stainless steel.

10. The fluidic connector of any preceding claim, wherein the pipe fluidically connects a first portion of a refrigeration circuit disposed within the refrigeration enclosure with a second portion of the refrigeration circuit routed through a heat exchanger outside the refrigeration enclosure.

11. A refrigeration system (100), comprising:
a first enclosure (102) comprising one or more refrigeration components;
a refrigerant circuit (104) configured to circulate a refrigerant fluid through the one or more refrigeration components and a heat exchanger (106) placed externally to the first enclosure;
a second enclosure (108) comprising one or more electrical components configured to power and/or control the one or more refrigeration components; and
one or more fluidic connectors according to any preceding claim.

12. A refrigeration system (100), comprising:
a refrigerant circuit (106) configured to circulate a refrigerant fluid therethrough, wherein the refrigerant circuit comprises:
a first pipe (202) at least partially disposed in a passage (218) defined on an opposable structure (114) of a refrigeration enclosure (102, 108), wherein a flange (208) defined on an end of the first pipe is secured between the opposable structure and a plate (116) by one or more fasteners; and
a second pipe (210) fluidically connected to the first pipe through the passage.

13. The refrigeration system of claim 12, wherein the plate is configured to clamp the flange of the first pipe between the plate and the opposable structure to fluidically seal air on a first side of the opposable structure from a second side of the opposable structure.

14. The refrigeration system of claim 14, wherein the plate is reversibly secured to the opposable structure by the one or more fasteners, and/or wherein the second pipe is brazed to the opposable structure.

15. The refrigeration system of claim 12 or 13, wherein the first pipe is disposed within the refrigeration enclosure, and the second pipe is disposed externally to the refrigeration enclosure, and/or
wherein the second pipe is connected to a Round Tube Plate Fin, RTPF, ) coil of a heat exchanger (106) of the refrigeration system.
